(19) Europäisches Patentamt
European Patent Office
Office européen des brevets

(11) **EP 2 320 663 A1**

(12) **EUROPEAN PATENT APPLICATION**
published in accordance with Art. 153(4) EPC

(43) Date of publication:
**11.05.2011 Bulletin 2011/19**

(51) Int Cl.:
***H04N 7/32*** *(2006.01)*

(21) Application number: **09809440.2**

(86) International application number:
**PCT/JP2009/002066**

(22) Date of filing: **12.05.2009**

(87) International publication number:
**WO 2010/023782 (04.03.2010 Gazette 2010/09)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **25.08.2008 JP 2008214800**

(71) Applicant: **Hitachi Consumer Electronics Co., Ltd. Tokyo (JP)**

(72) Inventors:
• **ITO, Hiroaki**
  **Tokyo 100-8220 (JP)**
• **KARUBE, Isao**
  **Tokyo 100-8220 (JP)**
• **TAKAHASHI, Masashi**
  **Tokyo 100-8220 (JP)**
• **KOMATSU, Yuto**
  **Tokyo 100-8220 (JP)**

(74) Representative: **Strehl Schübel-Hopf & Partner Maximilianstrasse 54 80538 München (DE)**

(54) **IMAGE DISPLAY DEVICE, IMAGE RECORDING AND REPRODUCTION DEVICE, AND IMAGE PROCESSING METHOD**

(57) Disclosed is an image processing technique which more suitably reduces flicker noise. An image display device is comprised of an input unit which inputs encoded image data containing images encoded by intraframe prediction and interframe prediction, an image decoder which decodes the encoded image data, a filter unit which filters the decoded images output from the image decoder, and a display unit which displays the image after filtering.

The filter unit performs at least a process to correct the pixel values in a decoded image decoded by interframe prediction immediately preceding in time a decoded image decoded by intraframe prediction of the decoded images output from the image decoder.

*FIG. 1*

EP 2 320 663 A1

## Description

Technical Field

The present invention relates to an image processing technique for decoding encoded image signals to reproduce and display images.

Background Art

As a method for coding moving image data, such as TV signals, with a high degree of efficiency to record or transmit it, MPEG (Moving Picture Experts Group) formats have been developed, and in particular, the MPEG-1 standard, MPEG-2 standard and MPEG-4 standard are acknowledged as global standard coding formats. In addition, the H. 264/AVC (Adbanced Video Coding) standard and some other standards are adopted as a format for further increasing compression rate.

In general, the high compression efficiency of moving image coding is achieved by predictive coding utilizing correlation of images in a spatial direction or temporal direction, frequency transform, quantization, variable length coding and other processing; however, the above-described coding processes include an irreversible coding scheme that cannot reconstruct the original signals, which yields signal degradation in a decoded image compared with the original image. Such signal degradation caused by the coding processes is hereinafter referred to as coding distortion.

One of the coding distortions is flicker noise that is a degradation phenomenon observed as screen flickering caused by significant changes in luminance and color made per every frame or per a few frames in decoded images. A technique of reducing the flicker noise is disclosed in Patent Literature 1.

Citation List

Patent Literature

    PTL 1: Japanese Unexamined Patent Application Publication No. 2006-229411

Summary of Invention

Technical Problem

Patent Literature 1 proposes a technique of reducing flicker noise of decoded moving images that were encoded only by intraframe predictive coding (predictive coding using the correlation of image signals in a single frame); however, this technique cannot always fully reduce the flicker noise of decoded moving images that were encoded by commonly-used interframe predictive coding (predictive coding using the correlation of image signals of a plurality of frames).

The present invention has been made in view of the above-described problem and has an object to more suitably reduce the flicker noise.

Solution to Problem

Embodiments of the present invention can be structured as cited in the scope of claims, for example.

Advantageous Effects of Invention

According to the present invention, flicker noise can be more suitably reduced.

Brief Description of Drawings

    [FIG. 1] FIG. 1 is a block diagram showing the structure of an image display device of the first embodiment of the present invention.
    [FIG. 2] FIG. 2 is a block diagram showing an example of a coding device producing encoded image data to be input to the image display device according to the first embodiment of the present invention.

[FIG. 3] FIG. 3 is a block diagram showing the details of an image decoder according to the first embodiment of the present invention.

[FIG. 4] FIG. 4 illustrates the structure of encoded image data and an example of flickering artifact occurrence.

[FIG. 5] FIG. 5 illustrates exemplary operations of the image processor of the first embodiment of the present invention.

[FIG. 6] FIG. 6 illustrates the exemplary operations of the image processor of the first embodiment of the present invention.

[FIG. 7] FIG. 7 illustrates the exemplary operations of the image processor of the first embodiment of the present invention.

[FIG. 8] FIG. 8 illustrates the exemplary operations of the image processor of the first embodiment of the present invention.

[FIG. 9] FIG. 9 illustrates the exemplary operations of the image processor of the first embodiment of the present invention.

[FIG. 10] FIG. 10 is a block diagram showing the structure of an image recording and reproduction device according to the third embodiment of the present invention.

[FIG. 11] FIG. 11 illustrates the exemplary operations of the image processor of the first embodiment of the present invention.

[FIG. 12] FIG. 12 illustrates the exemplary operations of the image processor of the first embodiment of the present invention.

[FIG. 13] FIG. 13 illustrates the exemplary operations of the image processor of the first embodiment of the present invention.

[FIG. 14] FIG. 14 illustrates the exemplary operations of the image processor of the first embodiment of the present invention.

[FIG. 15] FIG. 15 illustrates exemplary operations of the image processor of the second embodiment of the present invention.

[FIG. 16] FIG. 16 illustrates the exemplary operations of the image processor of the second embodiment of the present invention.

[FIG. 17] FIG. 17 illustrates the exemplary operations of the image processor of the second embodiment of the present invention.

[FIG. 18] FIG. 18 illustrates exemplary operations of the image processor of the embodiments of the present invention.

Embodiments for Carrying Out the Invention

Embodiments of the present invention will be described below.

First Embodiment

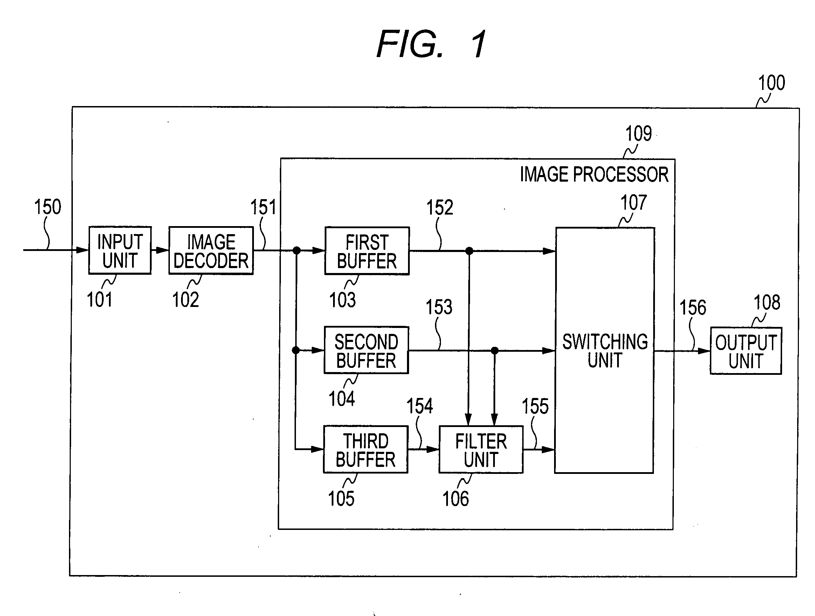

FIG. 1 is a block diagram showing the structure of an image display device according to the first embodiment of the present invention.

The image display device (100) in FIG. 1 includes an input unit (101), an image decoder (102), a first buffer (103), a second buffer (104), a third buffer (105), a filter unit (106), a switching unit (107), and an output unit (108). In this description, the first buffer (103), second buffer (104), third buffer (105), filter unit (106), and switching unit (107) make up an image processor (109). The above-mentioned components may be implemented by hardware or software, or alternatively, by a module made from a combination of hardware and software.

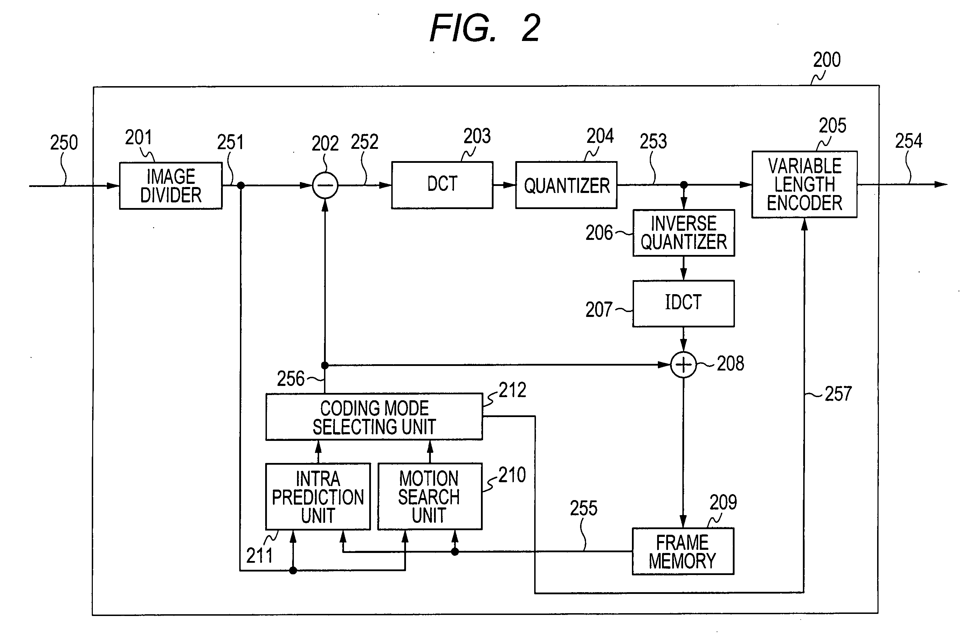

Following is a description about operations of the image display device shown in FIG. 1. In FIG. 1, encoded image data (150) input from the input unit (101) is, for example, data created by an image coding device shown in FIG. 2. The image decoder (102) decodes the encoded image data to produce a decoded image (151). Among decoded images (151), the first buffer (103) stores a first decoded image that was encoded by intraframe predictive coding means. The second buffer (104) stores, among the decoded images (151), a second decoded image that was encoded by the intraframe predictive coding means and follows in time the first decoded image. The third buffer (105) stores, among the decoded images (151), one or more decoded images that follow in time the first decoded image and precede in time the second decoded image.

The filter unit (106) performs a filtering process to correct a decoded image (154) retrieved from the third buffer (105) using the signals of the first decoded image (152) and the second decoded image (153) retrieved from the first buffer (103) and second buffer (104), respectively. The switching unit (107) selects one at a time from the first decoded image (152), the second decoded image (153) and the post-filtered decoded image (155) retrieved from the filter processing unit (106) to output it as an image signal (156). The selection and output of the image signals (156) by the switching unit (107) are made in the same order as the output order of the decoded images (151) from the image decoder (102). The output unit (108) outputs the image signals (156) output from the switching unit (107) to display them.

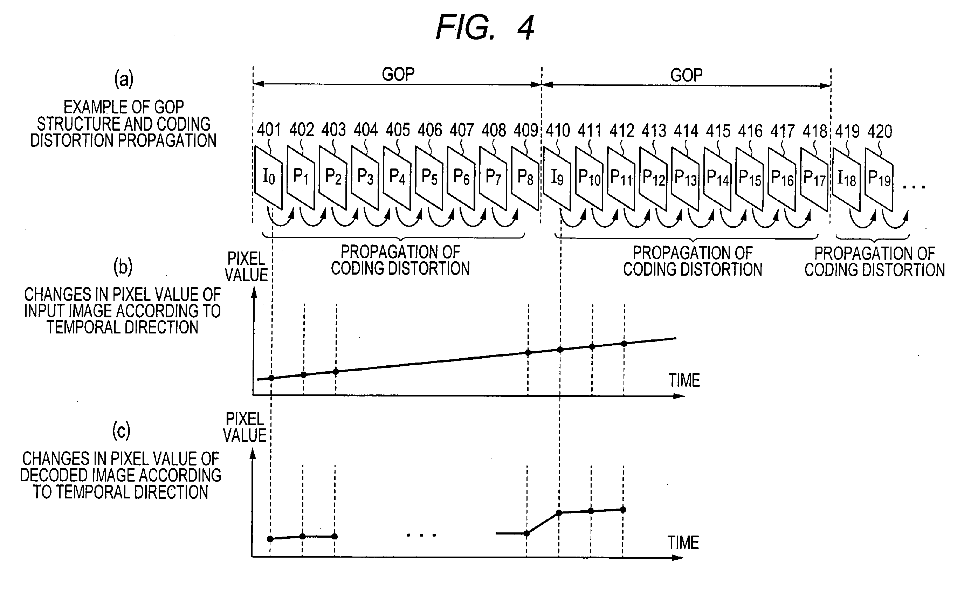

A moving image coding method for producing encoded image data to be input to the image display device according to the first embodiment will be now described. Generally, two coding methods are adaptively used in moving image coding: an intraframe predictive coding method using an encoded image within the same frame as a target image to be encoded as a reference image; and an interframe predictive coding method using preceding and following frames on a time axis as reference images. For example, the MPEG-2 standard switches between the two coding methods on a picture-by-picture basis. The picture encoded only by the intraframe predictive coding method is referred to as an I-picture. Hereinafter, the simply represented term "I" denotes an I-picture. Among the pictures encoded by the interframe predictive coding method, the picture that can be encoded from an encoded past picture on the time axis by interframe predictive coding (forward prediction) is referred to as a P-picture. On the other hand, the picture that can be encoded from an encoded future picture on the time axis by interframe predictive coding (backward prediction) and the picture that can be encoded from both encoded past and future pictures by interframe predictive coding (bidirectional prediction) are referred to as B-pictures. Hereinafter, the simply represented terms "P" and "B" denote a P-picture and B-picture, respectively. In consideration of random access or the like executed at decoding and displaying, a data format periodically including I-pictures that can be decoded without reference pictures is generally employed since decoding of the P-pictures and B-pictures requires reference pictures. FIG. 4(a) shows an exemplary coding data format with I-picture intervals = 9. In FIG. 4, for simplified description, only I-pictures and P-pictures are used to show the coded data example.

Next, flicker noise handled in the embodiment will be described. Since moving images have generally a strong correlation in a temporal direction, the interframe predictive coding method is chosen at a high rate for P-pictures and B-pictures. Thus, distortion generated in the coding process is propagated to P-pictures and B-pictures after an I-picture (from I0 to P8 and from I9 to P17 in FIG. 4(a)) through the interframe prediction. On the other hand, since interframe predictive coding is not used for the I-pictures, the distortion is not propagated to the I-pictures (from P8 to I9 and from P17 to I18 in FIG. 4(a)). Because of this, a change in distortion feature between the I-pictures causes a significant change in luminance and color of the decoded images and results in flicker appearing on a screen. Such a phenomenon tends to be more noticeable especially when image signal values gradually change, for example, when the moving picture fades out or in. In the case where the phenomenon is applied to FIG. 4, the signal values of input images increase over time as shown in FIG. 4(b); however, the signal values of decoded images change, for example, little from I0 to P8, but significantly change from P8 to I9 as shown in FIG. 4(c), and these changes are perceived as flicker noise. The present invention provides an image display device and image recording and reproduction device capable of reducing the flicker and displaying high-quality images.

With reference to FIG. 2, an image coding device (200) producing encoded image data (150) to be input to the image display device (100) in FIG. 1 will be described.

In the image coding device (200), an image divider (201) divides an input image (250) into blocks. A subtracter (202) performs a subtraction process to the divided input image blocks (251) and a predicted image block (256), which will be described later, output from a coding mode selecting unit (212) to produce a differential image signal (252). A DCT unit (203) performs discrete cosine transfer (Discrete Cosine Transform, hereinafter referred to as DCT) to the differential image signal (252) output from the subtracter (202) on the image block basis to output it to a quantizer (204). The quantizer (204) quantizes the input DCT data to produce quantized data (253). A variable length encoder (205) performs variable length coding to the quantized data (253) to output encoded image data (254) suitable for a transmission line. On the other hand, an inverse quantizer (206) inversely quantizes the quantized data (253) to output inversely-quantized data. An inverse DCT unit (207) performs an inverse DCT to the inversely-quantized data to produce differential block data. An adder (208) adds the differential block data to the predicted image block (256) from the coding mode selection unit (212) to produce a decoded image. A frame memory (209) stores the decoded image to use it as a reference image for an input image to be subsequently encoded. A motion estimation unit (210) performs motion estimation to a reference image (255) retrieved from the frame memory (209) to obtain a predicted image having the minimum difference from the divided input image blocks (251). An intraframe-prediction unit (211) performs intraframe prediction with a reference image retrieved from the frame memory (209) to obtain a predicted image having the minimum difference from the divided input image blocks (251). A coding mode selecting unit (212) selects either one of the predicted images obtained by the motion estimation unit (210) and the intraframe-prediction unit (211) and outputs the selected image as a predicted image block (256) to the subtracter (202). If the coding mode selecting unit (212) selects the predicted image obtained by the motion estimation unit (210), information about the interframe predictive coding method used to obtain the predicted image is output as a coding mode (257) to the variable length encoder (205). If the coding mode selecting unit (212) selects the predicted image obtained by the intraframe-prediction unit (211), information about the intraframe prediction method used to obtain the predicted image is output as a coding mode (257) to the variable length encoder (205). The variable length encoder (205) encodes the quantized data (253) and coding mode (257) with variable length codes and outputs them.

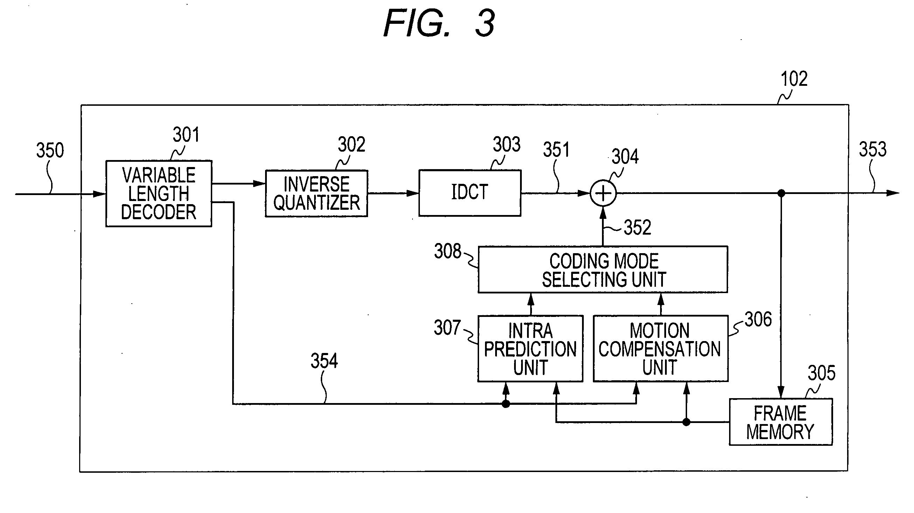

FIG. 3 is a block diagram showing an exemplary structure of the image decoder (102) in FIG. 1. Following is a description about the image decoder shown in FIG. 3. A variable length decoder (301) decodes input encoded image data (350) with variable length codes and outputs quantized data to an inverse quantizer (302). The inverse quantizer (302) inversely quantizes the quantized data and outputs the inversely quantized data. An inverse DCT unit (303) performs inverse DCT to the inversely quantized data to output differential block data (351). An adder (304) adds the differential block data (351) to a predicted image (352) output from a coding mode selecting unit (308) to produce a decoded image. The produced decoded image is output as decoded image data (353) and input into a frame memory (305) so as to be used as a reference image for subsequent encoded data. If the encoded image data to be decoded next is data encoded by the interframe predictive coding method, a motion compensation unit (306) receives a coding mode (354) from the variable length decoder (301), retrieves an image associated with the coding mode from the frame memory (306) to produce a predicted image, and outputs it to the coding mode selecting unit (308). If the encoded image data to be decoded next is data encoded by the intraframe predictive coding method, an intraframe-prediction unit (307) receives a coding mode (354) from the variable length decoder (301), retrieves an image associated with the coding mode from the frame memory (306) to produce a predicted image (352), and outputs it to the coding mode selecting unit (308). If the encoded image data to be decoded is data encoded by the interframe predictive coding method, the coding mode selecting unit (308) selects the predicted image output from the motion compensation unit (306) to output it to the adder (304).

On the other hand, if the encoded image data to be decoded is data encoded by the intraframe predictive coding method, the coding mode selecting unit (308) selects the predicted image output from the intraframe-prediction unit (307) and outputs it to the adder (304).

Next, with reference to the above-described FIG. 4(a), the first buffer (103), second buffer (104) and third buffer (105) in FIG. 1 will be described.

Suppose the pictures in FIG. 4(a) are decoded images (151) in FIG. 1, I0 (401) is stored, as a decoded image that was encoded by intraframe predictive coding means, in a first buffer (103). Next, I9 (410) is stored, as a decoded image that was encoded by the intraframe predictive coding means and follows in time I0 (401), in a second buffer (104). At last, P1 (402) to P8 (409), which follow in time the I0 (401), but precede I9 (410), are stored in a third buffer (105).

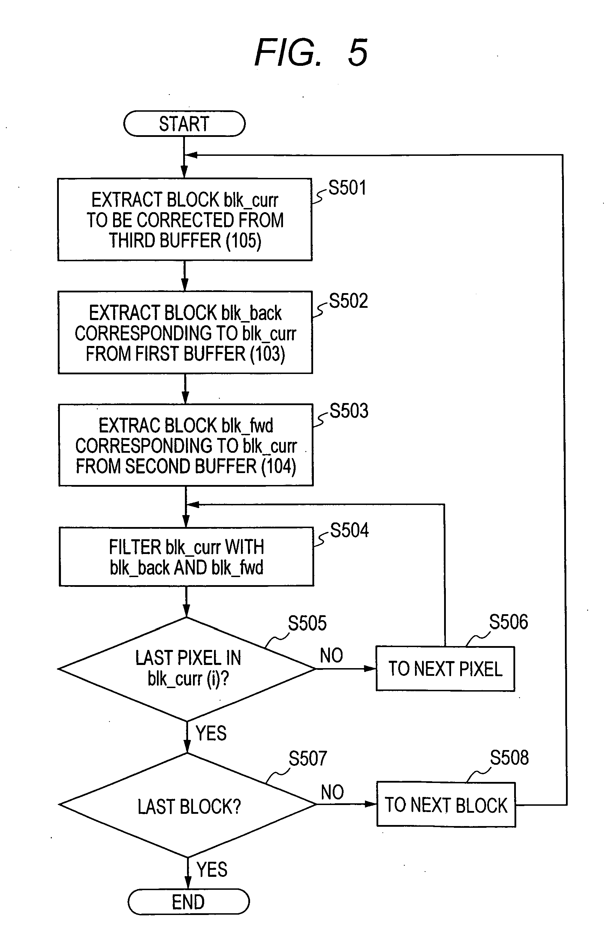

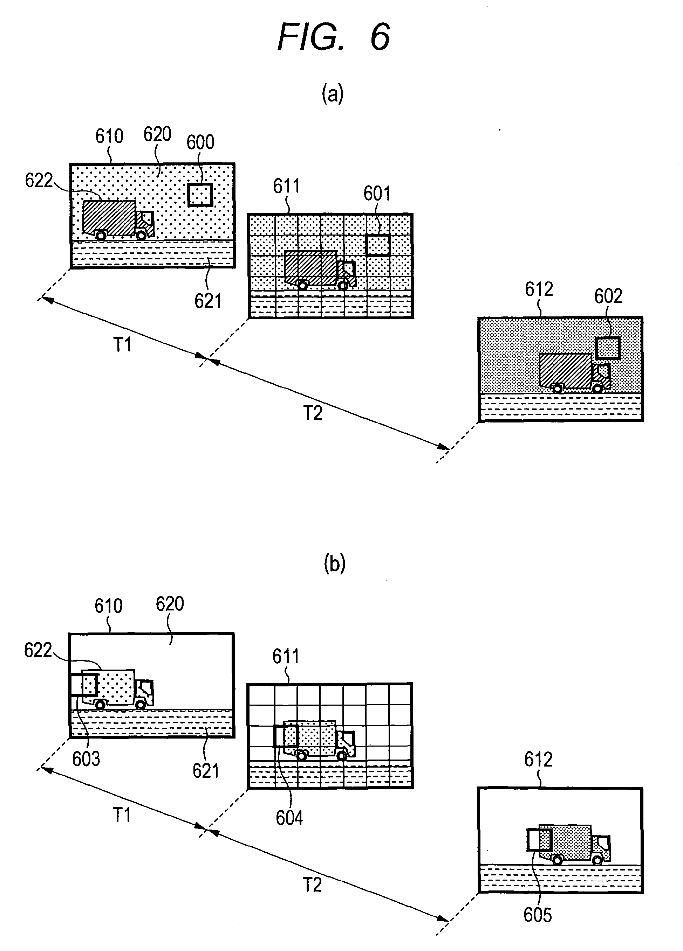

With reference to FIGS. 5 and 6, operations of the filter unit (106) in FIG. 1 will be described. FIG. 5 is a flow chart describing the operations of the filter unit (106). In the following description, the flow chart of FIG. 5 will be described along with exemplary operations shown in FIG. 6.

In FIGS. 6(a) and 6(b), an image (610) is a decoded image retrieved from the first buffer (103) in FIG. 1. An image (611) is a decoded image retrieved from the third buffer (105) in FIG. 1. An image (612) is a decoded image retrieved from the second buffer (104) in FIG. 1. The image (611) is a target image to be subjected to a correction filtering process.

First, FIG. 6(a) will be described. FIG. 6(a) shows the correction filtering process performed on a block (601) of the image (611). In FIG. 6(a), the image (610)

is located before the image (611) in time by T1, while the image (612) is located after the image (611) in time by T2. In the example of FIG. 6(a), with the passage of time from the image (610), image (611) to image (612), a track (622), or an object, moves from left to right in the frames. At the same time, a background area (620) and a road area (621) remain still. In the following description about each frame, if necessary, the area occupied by the track (622) is referred to as a moving area, while the areas occupied by the background area (620) and road area (621) are referred to as static areas.

In FIG. 6(a), the target block to which the correction filtering process is subjected is a block (601), while the reference blocks used for the correction filtering process are a block (600) in the image (610) and a block (602) in the image (612). The reference blocks are determined by the following method, which will be described later. According to the reference-block determination method of this embodiment, if a target block to which the correction filtering process is subjected belongs to a static area, the position of the reference blocks in frames are the same as the position of the target block to be subjected to the correction filtering process. In the example of FIG. 6(a), the positions of the reference blocks (600) and (602) on the frames are the same as the position of the target block (601) to be subjected to the correction filter on the frame.

In addition, the correction filtering process according to the embodiment is to reduce flicker noise caused by temporal changes in image luminance between the reference blocks and correction-filter target block. Therefore, FIG. 6(a) shows the most recognizable example of the effect. In other words, FIG. 6(a) shows the example in which the luminance of the background area (620), which is a static area including the correction-filter target block (601), reference block (600) and reference block (602), varies with time from the image (610), image (611) to image (612).

Next, FIG. 6(b) will be described. FIG. 6(b) shows the correction filtering process performed on a block (604) of the image (611). The positional relationship of the image (610), image (611) and image (612) and the relationship between the moving area consisting of the track (622) and the static area consisting of the background area (620) and road area (621) in FIG. 6(b) are the same as those in FIG. 6(a), and therefore their descriptions will be omitted.

Points of difference in FIG. 6(b) from the example of FIG. 6(a) will be described. In FIG. 6(b), the target block to be subjected to a correction filtering process is a block (604), while the reference blocks to be used for the correction filtering process are a block (604) in the image (610) and a block (605) in the image (612). The method for determining the reference blocks will be described later as with FIG. 6(a). According to the reference-block determination method of this embodiment, if a block including a moving area is a target block to be subjected to the correction filtering process, the position of the reference blocks in frames shifts so as to follow the movement of a moving object making up the moving area. Since the correction-filter target block (603) includes a part of the track (622), which is the moving object, the position of the reference blocks in frames shifts so as to follow the movement of the track (622), resulting in that the reference block (603) and reference block (605) fall at the positions shown in FIG. 6(b).

The correction filtering process according to the embodiment is to reduce flicker noise caused by temporal changes in image luminance between the reference blocks and correction-filter target block. In addition, the correction filtering process according to the embodiment can reduce even flicker noise caused by temporal changes in pixel luminance on the moving object. In order to show the most recognizable example of the flicker noise reduction effect on the moving object, FIG. 6(b) shows luminance variations different from FIG. 6(a) as an example. In other words, FIG. 6(b) shows an example in which the luminance of the pixels, which make up the moving area (track (622)) included in the correction-filter target block (604), reference block (603) and reference block (605), varies with time from the image (610), image (611) to image (612).

With reference to the examples in FIG. 6(a) and 6(b), an operation flow of the filter unit (106) in FIG. 1 will be described. The example of FIG. 6(a) will be firstly used for the description. In the flow chart in FIG. 5, at first, a target block to be subjected to filter processing ((601) in FIG. 6(a)) is extracted from a decoded image ((611) in FIG. 6(a)) retrieved from the third buffer (105) in FIG. 1 ((S501) in FIG. 5). Next, a reference block ((600) in FIG. 6(a)) to be used for correction is extracted from a decoded image ((610) in FIG. 6(a)) retrieved from the first buffer (103) in FIG. 1 ((S502) in FIG. 5). Then, a reference block ((602) in FIG. 6(a)) to be used for correction is extracted from a decoded image ((612) in FIG. 6(a)) retrieved from the second buffer (104) in FIG. 1 ((S503) in FIG. 5). The method for extracting the reference block ((600) in FIG. 6(a)) and reference block ((602) in FIG. 6(a)) performed in the steps (S502) and (S503) will be described later. Then, the i-th pixel of the target block (601) is subjected to a filtering process ((S504) in FIG. 5). The filtering process will be described in detail later. Next, it is determined whether all pixels included in the target block (601) have been subjected to the filtering process ((S505) in FIG. 5). If there is an unfiltered pixel in the target block (601) (i.e., the determination result is NO at (S505) in FIG. 5), the filtering process is performed on the next pixel ((S506) in FIG. 5). On the other hand, if there is no unfiltered pixel in the target block (601) (i.e., the determination result is YES at (S505) in FIG. 5), it is determined whether the target block (601) is the final block in the decoded image (611) ((S507) in FIG. 5). If there is an unfiltered block in the decoded image (611) (i.e., the determination result is NO at (S507) in FIG. 5), the next block is subjected to the filtering process ((S508) in FIG. 5). On the other hand, if there is no unfiltered block in the decoded image (611) (i.e., the determination result is YES at (S507) in FIG. 5), the process is terminated.

The operations in the flow chart in FIG. 5 have been described with the example in FIG. 6(a); however, the same operations are performed even for the example in FIG. 6(b) except for that the block (601) is replaced as a target block by the block (604) and the reference blocks (600), (602) are replaced as reference blocks extracted at steps (S502) and (S503) by the reference blocks (603), (605). In short, the operations in the flow chart of FIG. 5 are applicable to the examples in FIG. 6(a) and 6(b).

The following is a detailed description about steps (S502) and (S503) for extracting reference blocks used for correction in FIG. 5. The reference-block extraction process can be applied to both the examples in FIG. 6(a) and 6(b).

When the extraction process is applied to the example in FIG. 6(a), the term "target block" in the following description denotes the target block (601) in the decoded image (611), while denoting the target block (604) in the decoded image (611) for the case of the example in FIG. 6(b).

Similarly, when the extraction process is applied to the example in FIG. 6(a), the term "reference block" of the decoded image (610) in the following description denotes the reference block (600) in the decoded image (610), while denoting the reference block (603) in the decoded image (610) for the case of the example in FIG. 6 (b) .

Furthermore, when the extraction process is applied to the example in FIG. 6(a), the term "reference block" of the decoded image (612) in the following description denotes the reference block (602) in the decoded image (612), while denoting the reference block (605) in the decoded image (612) for the case of the example in FIG. 6(b).

The method for extracting the reference blocks at steps (S502) and (S503) is performed as follows. A method for obtaining a reference block in the image (610) includes calculating sums of absolute differences between the pixels in the target block and the pixels in blocks in the image (610) and selecting a block having the minimum value of the sum of absolute difference.

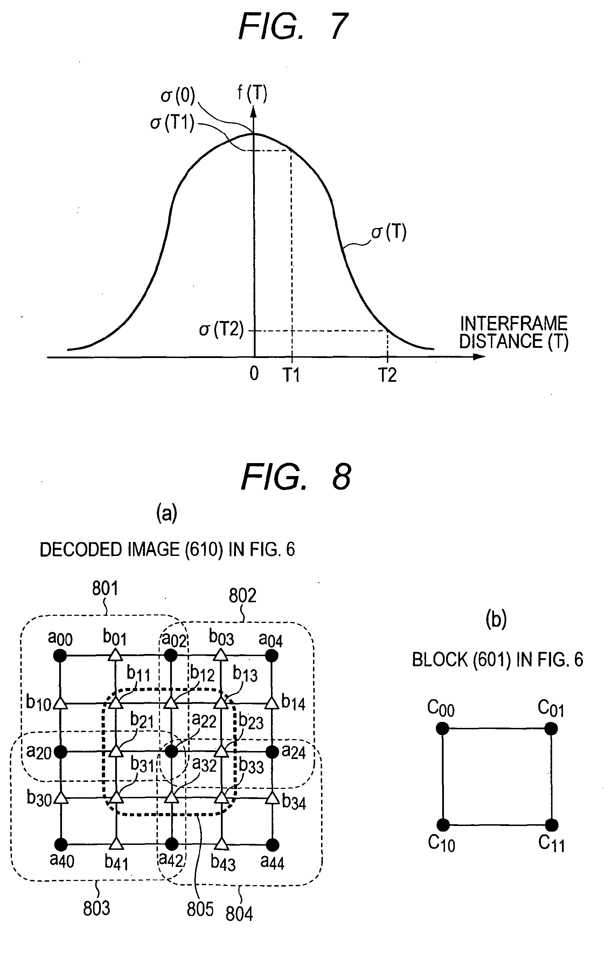

The above operations will be described below with reference to FIG. 8. FIG. 8(b) shows the target block in the decoded image (611). To make the description simple, the block size is assumed to be 2x2. The pixels included in the target block in the decoded image (611) are assumed to be $C_{00}$, $C_{01}$, $C_{10}$, $C_{11}$. FIG. 8(a) shows the decoded image (610). The pixel value in the decoded image (610) is assumed to be $a_{ij}$ (i=0, 2, 4, j=0, 2, 4). At this time, four blocks, a block (801), block (802), block (803) and block (804), can be selected as candidate blocks having the same size as the target block. For example, the sum of absolute difference between the target block and the block (801) can be calculated by using Expression 3 below.

[Expression 3]

Sum of absolute difference

$$= |c_{00} - a_{00}| + |c_{01} - a_{02}| + |c_{10} - a_{20}| + |c_{11} - a_{22}|$$

As with Expression 3, the sums of absolute differences between the target block and the block (802), block (803) and block (804) can be calculated. In the four blocks, a block having the minimum sum of absolute difference is regarded as a reference block.

The above-described operations are an example for determining the reference block using the values of existing pixels in the decoded image (610); however, it is possible to obtain an optimal block by, for example, generating pixels at nonexistent pixel points in the reference image (610) by interpolation and using the generated interpolated pixels. In FIG. 8(a), $b_{ij}$ (i=0 to 4, j=0 to 4) represents the interpolated pixels. The interpolated pixels $b_{ij}$ can be generated by the following calculations.

For example, when a pixel at an intermediate position (1/2 pixel position) in the horizontal direction between pixels $a_{00}$ and $a_{02}$ in FIG. 8(a) is $b_{01}$, the value of pixel $b_{01}$ can be obtained by Expression 4.

[Expression 4]

$$b_{01} = (a_{00} + a_{02})/2$$

Similarly, interpolated pixel $b_{10}$ at an intermediate position in the vertical direction between pixels $a_{00}$ and $a_{20}$ can be obtained by Expression 5.

[Expression 5]

$$b_{10} = (a_{00} + a_{20})/2$$

Furthermore, pixel $b_{11}$ at an intermediate position in both the horizontal and vertical directions can be obtained by Expression 6 using the two interpolated pixels $b_{01}$, $b_{21}$.

[Expression 6]

$$b_{11} = (b_{01} + b_{21})/2$$

$$= (a_{00} + a_{02} + a_{20} + a_{22})/4$$

Although the above interpolated pixels are generated at 1/2 pixel position, more highly accurate interpolated pixels, with 1/4, 1/8 or 1/16 pixel accuracy, can be generated by increasing the number of taps. Using thus generated interpolated pixels, the reference block in the decoded image (610) can be obtained with fractional pixel accuracy. For example, the block (805) in FIG. 6(a) is a region consisting of interpolated pixels $b_{11}$, $b_{13}$, $b_{31}$, $b_{33}$ with a half pixel accuracy, and the sum of absolute difference between the target block in the decoded image (611) and the block (805) can be calculated by Expression 7 below.

[Expression 7]

Sum of absolute difference

$$= |c_{00} - b_{11}| + |c_{01} - b_{13}| + |c_{10} - b_{31}| + |c_{11} - b_{33}|$$

Evaluation with the fractional pixel accuracy can further improve accuracy compared with evaluation with integer accuracy.

The above description is about an exemplary method for obtaining a reference block in decoded image (610) shown in FIG. 6; however, the reference block in the decoded image (612) can be extracted in the same manner by replacing the reference block in the decoded image (610) with a reference block in the decoded image (612), and therefore the explanation will be omitted.

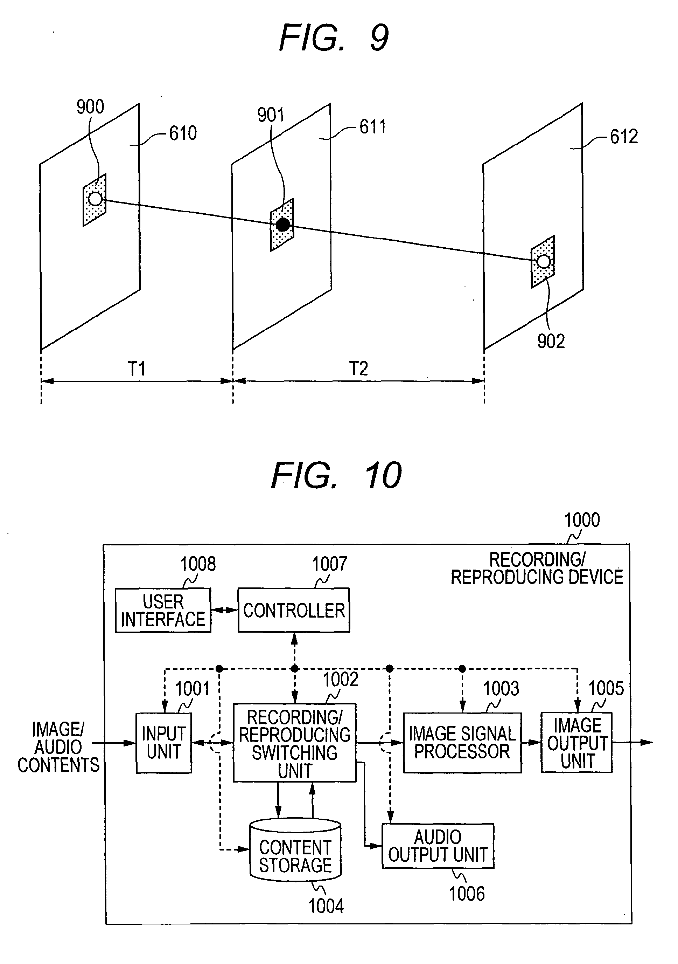

The reference block can be obtained by another method. Another example of the methods for determining the reference block will be described below with FIG. 9. Images (610), (611), (612) in FIG. 9 are identical to those in FIG. 6. A target block (901) in FIG. 9 corresponds to the block (601) or block (604) in FIG. 6. In FIG. 9, the decoded images (610) and (612) have blocks (900) and (902), respectively, that are symmetric with respect to a pixel in the target block (901). In this situation, the sums of absolute differences (SATD1) between the pixels in the target block (901) and pixels in the block (900) and the sums of absolute differences (SATD2) between the pixels in the target block (901) and pixels in the block (902) are calculated. The blocks (900), (902) having the minimum value of the sum of SATD1 and SATD2 are regarded as reference blocks.

In the case of FIG. 6(a), for example, the method for extracting the reference block described with FIGS. 6, 8 and 9 extracts the reference block (600) in the decoded image (610) and reference block (602) in the decoded image (612) as reference blocks for the target block (601) in the decoded image (611) included in the static area. As already described above, the target block (601) in the decoded image (611), the reference block (600) in the decoded image (610) and the reference block (602) in the decoded image (612) are the same in terms of their positions in images. This is because the difference values of the blocks at the same position in the plurality of images different in time are low in the static area.

Similarly, in the case of FIG. 6(b), for example, the method for extracting the reference blocks described with FIGS. 6, 8 and 9 extracts the reference block (603) in the decoded image (610) and the reference block (605) in the decoded image (612) as reference blocks for the target block (604) in the decoded image (611) including the moving object (track (622)), which is a moving area. The target block (601) in the decoded image (611) and the reference block (603) in the decoded image (610) are in a positional relationship in which the target block (601) shifts from the reference block (603) so as to follow the movement of the moving object (track (622)). In addition, the reference block (602) in the decoded image (612) and the target block (604) in the decoded image (611) are in a positional relationship in which the reference block (602) shifts from the target block (604) so as to follow the movement of the moving object (track (622)). This is because the difference values of the blocks that have shifted so as to follow the movement of the moving object in the plurality of images different in time are low in the moving area.

In the exemplary operations, for the target block (604) including the background area and track, such as the block (604) in the decoded image (611) in FIG. 6(b), all pixels in the block (604) are evaluated based on Expressions 3 to 7 to obtain reference blocks. However, it is possible to obtain the reference blocks by evaluating only the track area in the block (604) based on Expressions 3 to 7, because the signal level of the background area varies over time, thereby possibly improving extraction accuracy of the reference blocks. This can be achieved by adding a process for separating the background area from the track area within the block (604).

Determination and extraction of the reference blocks at steps (S502) and (S503) in FIG. 5 can be made by using the above-described method for extracting the reference block.

Next, a filtering process performed at (S504) in FIG. 5 will be described in detail. As with the description of steps (S502) and (S503) in FIG. 5, the term "target block" in the following description denotes the target block (601) in the decoded image (611) when the process is applied to the example in FIG. 6(a), while denoting the target block (604) in the decoded image (611) when the process is applied to the example in FIG. 6(b).

Similarly, the term "reference block" of the decoded image (610) in the following description denotes the reference block (600) in the decoded image (610) when the process is applied to the example in FIG. 6(a), while denoting the reference block (603) in the decoded image (610) when the process is applied to the example in FIG. 6(b).

Furthermore, the term "reference block" of the decoded image (612) in the following description denotes the reference block (602) in the decoded image (612) when the process is applied to the example of FIG. 6(a), while denoting the reference block (605) in the decoded image (612) when the process is applied to the example of FIG. 6(b).

An exemplary operation of the filtering process shown in (S504) in FIG. 5 will be described with reference to Expression 1.

[Expression 1]

$$S_{fil}(i) = w0*S_{back}(i) + w1*S_{curr}(i) + w2*S_{fwd}(i)$$

(where w0 + w1 + w2 = 1)

In Expression 1, $S_{curr}$ (i) is a value of the i-th pixel in a pre-filtered target block, $S_{fil}$ (i) is a value of the i-th pixel in a post-filtered target block, $S_{back}$ (i) is a value of the i-th pixel in a reference block in a decoded image (610), and $S_{fwd}$ (i) is a value of the i-th pixel in a reference block in a decoded image (612). In addition, w0, w1, w2 are weighting factors for $S_{back}$ (1), $S_{curr}$ (1), $S_{fwd}$ (i), respectively, and their specific settings are shown in Expression 2 as an example.

[Expression 2]

$$w0 = \frac{f(T1)}{f(0) + f(T1) + f(T2)}$$

$$w1 = \frac{f(0)}{f(0) + f(T1) + f(T2)}$$

$$w2 = \frac{f(T2)}{f(0) + f(T1) + f(T2)}$$

In Expression 2, T1 denotes an interframe distance between the decoded image (611) and decoded image (610), and T2 denotes an interframe distance between the decoded image (611) and decoded image (612). Gaussian function (FIG. 7) is represented by f(T). The coefficient in Expression 2 is set to increase with decrease in interframe distance with respect to the decoded image (611) to be corrected.

Specifically, the filter unit (106) in FIG. 1, as indicated by Expression 1 and 2, multiplies the value of a pixel constituting the target block (601) before being corrected and each value of pixels constituting the reference block (600) and reference block (602) by the weighting factors obtained by applying the temporal interframe distances between the target image (611), reference image (610) and reference image (612) to the Gaussian functions, respectively, and adds up the multiplied results to obtain the value of a pixel constituting the target block (601) after being corrected.

This calculation can realize a filtering process capable of correcting the pixel value of the target block (601) to closely follow the transition of pixel values from the pixel constituting the reference block (600) to the pixel constituting the reference block (602). A detailed correction example of the pixel values will be described later.

Following is a description about operations of the switching unit (107) in FIG. 1. In the images in FIG. 4, I0 (401) is stored in the first buffer (103) in FIG. 1, I9 is stored in the second buffer (104) in FIG. 1, and P1 (402) to P8 (409) are stored in the third buffer (105) in FIG. 1. After being subjected to the above-described filtering process, P1 (402) to P8 (409) are referred to as P1' to P8', respectively. The switching unit (107) firstly outputs I0 that is retrieved from the first buffer (103), secondly outputs the post-filtered images P1' to P8' that are retrieved from the filter processing unit (106), and at last outputs I9 that is retrieved from the second buffer (104). By the way, P1 (402) to P8 (409) in FIG.

4 can be filtered through the above-described filtering process; however, P10 (411) to P17 (418) in FIG. 4 need to be subsequently subjected to the filtering process in the same manner. To achieve this, I9 (410) stored in the second buffer (104) in FIG. 1 is defined as "a first decoded image" in the above-description, and I18 (419), which follows I9 (410) in time and is a decoded image encoded by the intraframe predictive coding means, is stored as "a second decoded image" in the first buffer (103) in FIG. 1. P10 (411) to P17 (418) are subjected to the filtering process using I9 (410) as the first decoded image and I18 (419) as the second decoded image.

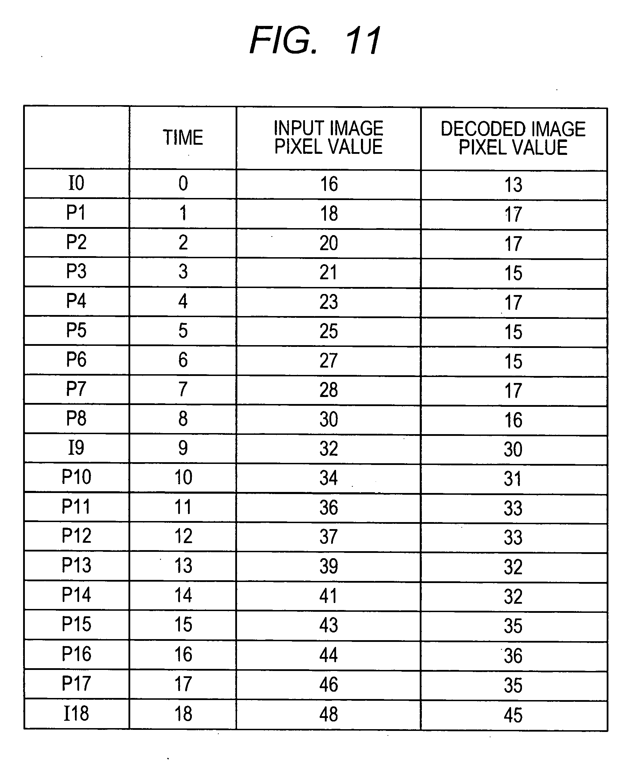

With reference to FIGS. 11 to 14, an exemplary correction of pixel values according to the embodiment will be described by illustrating specific image signals.

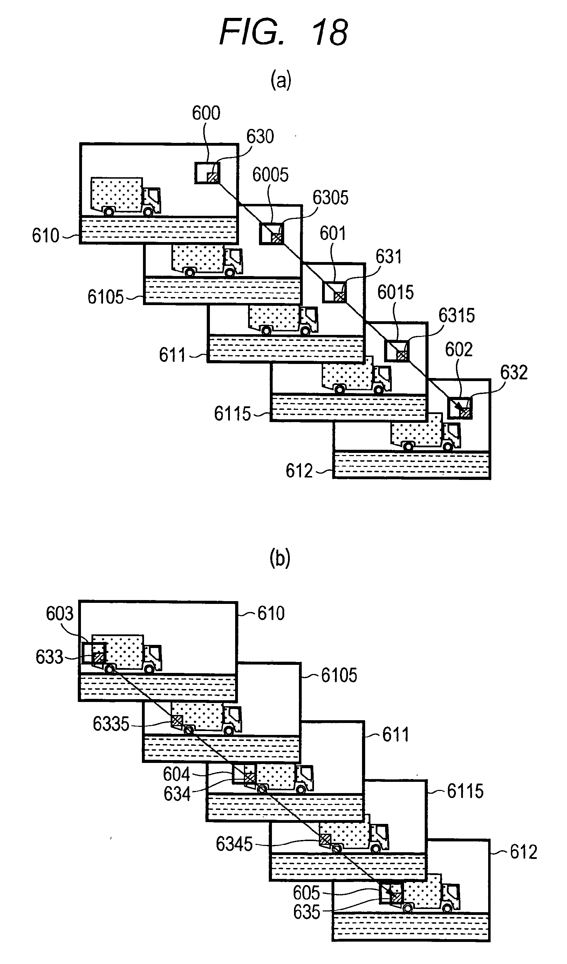

Note that the pixel values of each image used in FIGS. 11 to 14 are obtained from, for example, a sequence of pixels as shown in FIGS. 18(a) or 18(b).

First, FIG. 18(a) will be described. FIG. 18(a) shows an example corresponding to that in FIG. 6(a). In FIG. 18, decoded images (610), (611), (612) are all identical to those in FIG. 6(a). Decoded images (6105) and (6115) are positioned between the decoded image (610) and decoded image (611) and between the decoded image (611) and decoded image (612), respectively.

The blocks (600), (601), (602) are all identical to those in FIG. 6(a), and the block (601) is a target block that is used in the flow chart of FIG. 5 to extract the blocks (601) and (602) as reference blocks. The blocks (6005) and (6015) are both target blocks, as with the block (601), that are used to extract the blocks (601) and (602) as reference blocks. These blocks belong to a static area and are at the same position on a frame.

As to pixels in the static area, such as pixels (630), (6305), (631), (6315), (632), at the same position in the reference block (600), target block (6005), target block (601), target block (6015), reference block (602), respectively, the values of the pixels are listed in FIG. 11.

Next, FIG. 18(b) will be described. FIG. 18(b) shows an example corresponding to FIG. 6(b). In FIG. 18, decoded images (610), (611), (612) are all identical to those in FIG. 6(b). Decoded images (6105) and (6115) are positioned between the decoded image (610) and decoded image (611) and between the decoded image (611) and decoded image (612), respectively.

The blocks (603), (604), (605) are all identical to those in FIG. 6(a), and the block (604) is a target block that is used in the flow chart in FIG. 5 to extract the blocks (603) and (605) as reference blocks. These blocks include a moving object (track (622)), which is a moving area, and therefore are at positions according to the movement of the moving object.

Pixels in the moving area, such as pixels (633), (6335), (634), (6345), (635), are at positions according to the movement of the moving object; the values of the pixels are listed in FIG. 11.

The pixels (633), (6335), (634), (6345), (635) are indicated on a straight line, because the moving object (track (622)) in FIG. 18(b) moves with constant velocity; however, the moving object (track (622)) may not always move with constant velocity. Nevertheless, even when the moving object moves with varying velocities, the pixels are located at positions to which the pixels have moved to follow the movement of the moving object.

FIGS. 11 to 14 show examples of pixel value correction according to the embodiment with examples of pixel values on a plurality of images having the relationship as described in FIG. 18. Details will follow.

First, FIG. 11 shows an example of pixel values of an input image and decoded image regarding I0 (401) to I18 (419) in FIG. 4. In the following description, the decoded image shown in FIG. 11 is subjected to the filtering process based on Expressions 1 and 2.

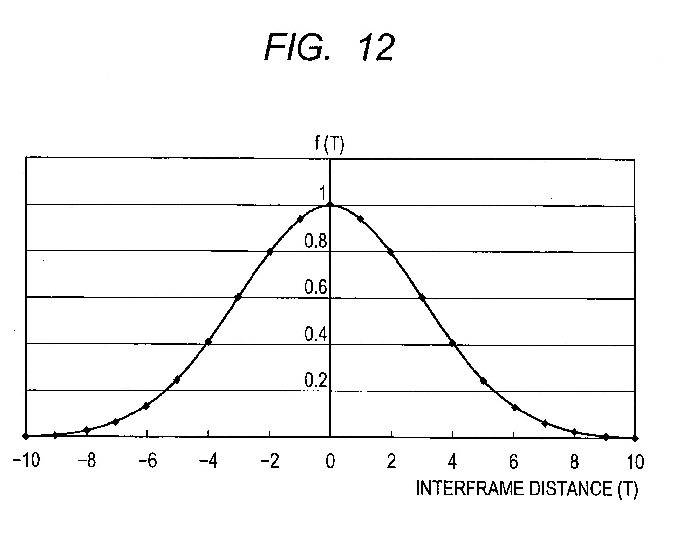

FIG. 12 shows a graph with values calculated by Expression 8 below as s Gaussian function in FIG. 7. Note that the values in FIG. 12 are obtained by Expression 8 with σ=3.

[Expression 8]

$$f(T) = \exp\left(-\frac{T*T}{2*\sigma^2}\right)$$

Expression 8 is substituted into Expression 2. If P1 is a target image to be filtered, for example, T1=1 (distance between I0 and P1) and T2=8 (distance between P1 and I9) are established, and therefore the substitution of Expression 8 into Expression 2 yields Expression 9.

[Expression 9]

$$w0 = \frac{f(T1)}{f(0) + f(T1) + f(T2)}$$

$$= \frac{f(1)}{f(0) + f(1) + f(8)}$$

$$= \frac{\exp\left(-\dfrac{1 \times 1}{2 \times 3^2}\right)}{\exp\left(-\dfrac{0 \times 0}{2 \times 3^2}\right) + \exp\left(-\dfrac{1 \times 1}{2 \times 3^2}\right) + \exp\left(-\dfrac{8 \times 8}{2 \times 3^2}\right)}$$

$$\approx 0.4791$$

In addition to the value of w0, Expression 9 shown above can obtain values of w1 and w2, i.e., w1≈0.5065 and w2≈0.0145.

Substituting the obtained values of w0, w1, w2, $S_{back}$ (i) =13 (decoded image of I0), $S_{curr}$ (i) =17 (decoded image of P1), $S_{fwd}$ (i) =30 (decoded image of I9) into Expression 1 yields Expression 10 below, resulting in pixel value of 15 for post-filtered P1.

[Expression 10]

$$S_{fil}(i) = w0*S_{back}(i) + w1*S_{curr}(i) + w2*S_{aft}(i)$$

$$= 0.4791*13 + 0.5065*17 + 0.0145*30$$

$$\approx 15$$

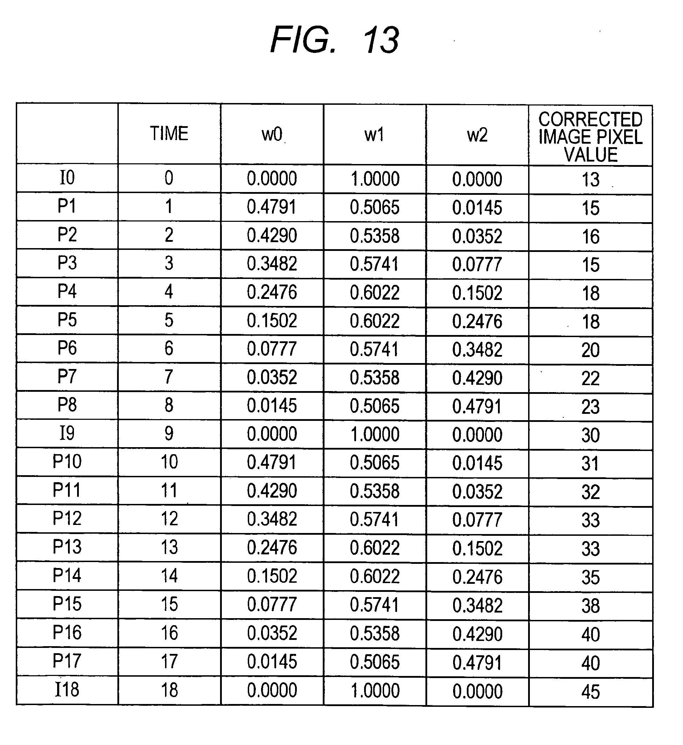

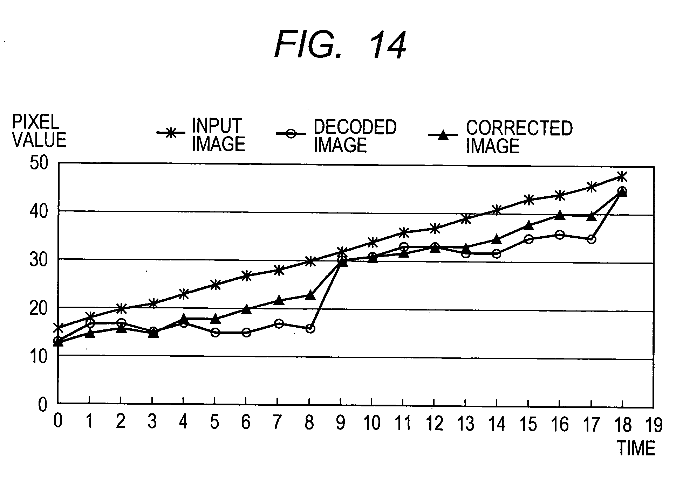

The results of the above-described processes performed on P1 to P17 are shown in FIG. 13. FIG. 14 is a graph plotting the pixels of input images, decoded images and corrected images in the exemplary operations. It is apparent from FIG. 14 that there are great fluctuations of the pixel values of the decoded images between time=8 (P8) and time=9 (I9), while the pixel values of the corrected images are corrected so as to reduce the fluctuation band.

Thus, the image display device according to the first embodiment of the present invention performs a correction filtering process so that the difference between the values of a pixel on an object of a P-picture immediately before an I-picture and a pixel on an object of the I-picture are reduced, thereby reducing screen flickering.

As described above, the image display device according to the first embodiment of the present invention uses, among decoded images including intraframe-prediction decoded images and interframe-prediction decoded images, the pixels of a first intraframe-prediction decoded image and the pixels of a second intraframe-prediction decoded image following in time the first intraframe-prediction decoded image, to subject the interframe-prediction decoded images located in time between the first intraframe-prediction decoded image and the second intraframe-prediction decoded image to the filtering process with a correction filter.

This smoothes signal variations of the decoded images, which are located in time before and after the intraframe-prediction decoded images as if they sandwich the intraframe-prediction decoded image, in the temporal direction, thereby reducing screen flickering and flicker noise.

Furthermore, the pixel values of the interframe-prediction decoded image are corrected using the intraframe-prediction decoded image whose pixel values are closer to the pixel values of the original image than the pixel values of the interframe-prediction decoded image, thereby reproducing pixel values close to those of the original image and therefore reducing flicker noise.

The image display device according to the first embodiment of the present invention can more suitably reduce flicker noise in the decoded images including intraframe-prediction decoded images and interframe-prediction decoded images.

Second Embodiment

An image display device according to the second embodiment of the present invention will be described below. The image display device of the embodiment will be described, as with the first embodiment, with reference to the block diagram in FIG. 1; however, the details of the image display device (100) in FIG. 1 are not reiterated.

The following description is of the first buffer (103), second buffer (104) and third buffer (105) in FIG. 1, and is made with the example in FIG. 4 (a).

Assuming that the images in FIG. 4(a) are the decoded images (151) in FIG. 1, I0 (401) is stored in the first buffer (103) as a decoded image that was encoded by intraframe predictive coding means. Then, I9 (410) is stored in the second buffer (104) as a decoded image that was encoded by intraframe predictive coding means and follows in time I0 (401). Then, P10 (411) to P17 (418) that follow I9 (410) are stored in the third buffer (105). The same filtering process as described in the first embodiment can be applied, and therefore the details are not reiterated.

The operations of the switching unit (107) in FIG. 1 will be described below. Among the images in FIG. 4, I0 (401) is stored in the first buffer (103) in FIG. 1, I9 (410) is stored in the second buffer (104) in FIG. 1, and P10 (411) to P17 (418) are stored in the third buffer (105) in FIG. 1. P10 to P17 subjected to the above-described filtering process are referred to as P10' to P17', respectively. At this time, the switching unit (107) firstly outputs I9 (410) retrieved from the second buffer (104), secondly outputs the post-filtered P10' to P17' retrieved from the filter processing unit (106). Since 10 (401), which was stored in the first buffer (103), has been already output after the filtering process performed on P1 (402) to P8 (409) prior to the above-described output operations, I0 (401) is not output at this time. Subsequent to P10 (411) to P17 (418) in FIG. 4 subjected to the aforementioned filtering process, P19 (420) and later pictures in FIG. 4 need to be filtered in the same way immediately after the filtering process. To perform the filtering process for P19 (420) and later pictures, I9 (410) stored in the second buffer (104) in FIG. 1 is defined as "the first decoded image" in the above description, while I18 (419), which follows in time I9 (410) and is a decoded image encoded by the intraframe predictive coding means, is defined as "the second decoded image" and stored in the first buffer (103) in FIG. 1, whereby P19 (420) and the later decoded images are subjected to the filtering process using I9 (410) as the first decoded image, and I18 (419) as the second decoded image.

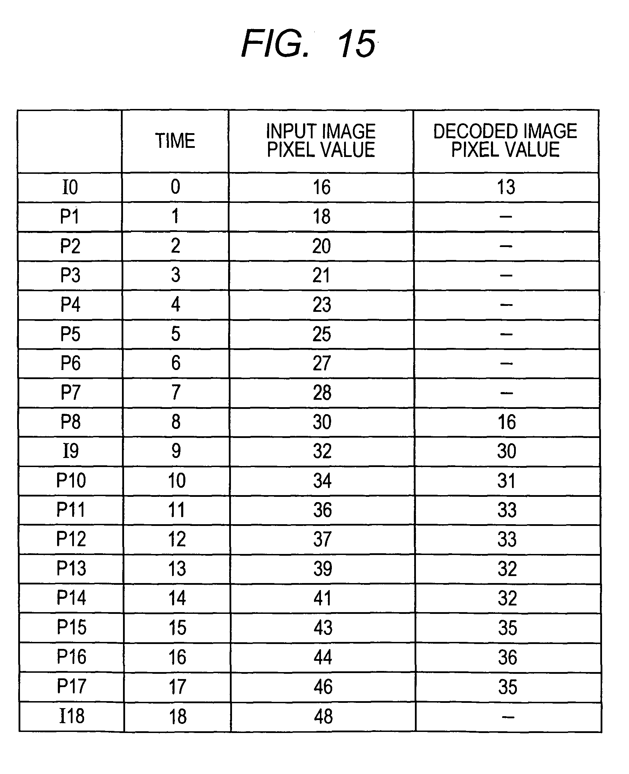

With reference to FIGS. 15 to 17, an example of pixel value correction according to the embodiment will be described and illustrated below with specific image signals. As with FIG. 18, FIGS. 15 to 17 show that pixels in a static area are located at the same position on frames and pixels in a moving area are located at positions according to the movement of the moving object.

FIG. 15 lists the pixel values of I0 (401) to P17 (418) in FIG. 4 of input images and decoded images, as an example. FIG. 15 indicates the same numeric values as those in FIG. 11, but the numeric values of decoded images P1 to P7 and I8 listed in FIG. 11 are deleted. This is to clearly show that P10 to P17 are corrected using the decoded images I0 and I9.

In the second embodiment, the image (I18) that was encoded by intraframe predictive coding and is located in time after P10 to P17 is an unknown image and therefore is predicted from I0 and I9. In this description, as an example, luminance of I0 to I18 is supposed to vary linearly. Let the interframe distance between I0 and I9 be $T_{back}$, the interframe distance between I9 and I18 be $T_{fwd}$, the pixel value of decoded image I0 be $S_{I0\_dec}$, and the pixel value of decoded image I9 be $S_{I9\_dec}$, the predicted pixel value of decoded image I18, or $S_{I18\_pred}$, can be calculated by the following Expression 11.

[Expression 11]

$$S_{I18\_pred} = \frac{S_{I9\_dec} - S_{I0\_dec}}{T_{back}} * \left(T_{back} + T_{fwd}\right) + S_{I0\_dec}$$

$$= \frac{30 - 13}{9} * \left(9 + 9\right) + 13$$

$$= 47$$

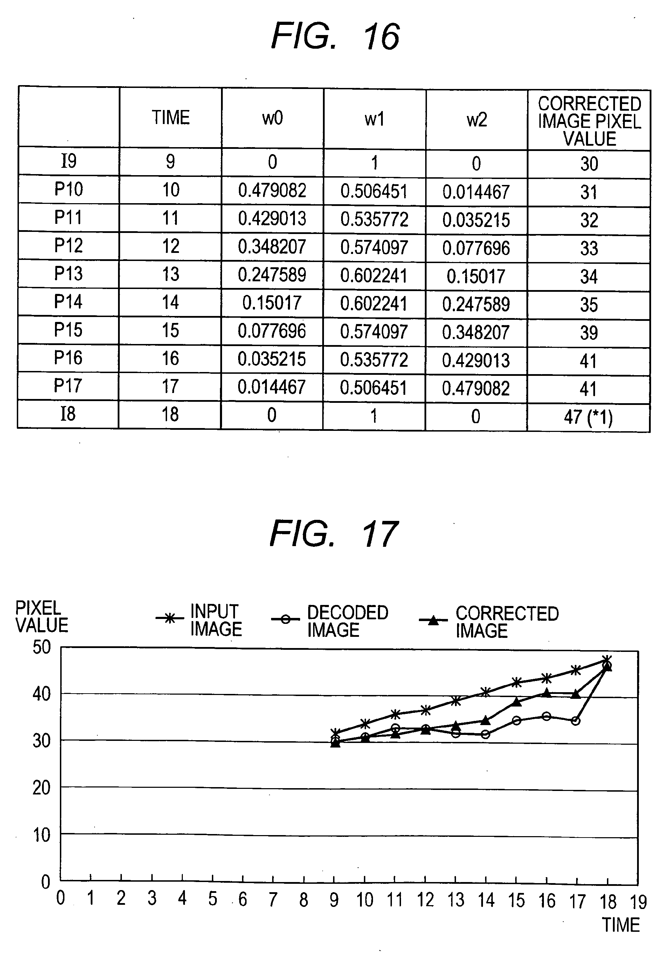

With the use of the above-calculated values $S_{I18\_pred}$=47 and $S_{I19\_dec}$=30, the filtering process can be performed in the same manner as with Expressions 8 to 10.
The results of the process performed on P10 to P17 will be shown in FIG. 16. FIG. 17 is a graph plotting the pixel values of input images, decoded images and corrected images in this example. It is apparent from FIG. 17 that there are great fluctuations of the pixel values of the decoded images between time=17 (P17) and time=18 (I18), while the pixel values of the corrected images are corrected so as to reduce the fluctuation band.

Thus, the image display device according to the second embodiment of the present invention also performs a correction filtering process so that the difference between the values of a pixel on an object of a P-picture immediately before an I-picture and a pixel on an object of the I-picture are reduced, thereby reducing screen flickering.

As described above, the image display device according to the second embodiment of the present invention uses, among decoded images including intraframe-prediction decoded images and interframe-prediction decoded images, the pixels of a first intraframe-prediction decoded image and the pixels of a second intraframe-prediction decoded image following in time the first intraframe-prediction decoded image to subject the interframe-prediction decoded image located after in time the second intraframe-prediction decoded image to the filtering process with a correction filter.

The image display device according to the second embodiment of the present invention performs the filtering process to the decoded images following in time the images used as the correction filter. In contrast to the image display device according to the first embodiment that creates a one-GOP delay at maximum to perform the filtering process and requires a buffer for storing decoded image information of the GOP, the image display device according to the second embodiment can mitigate the delay and eliminate the buffer for storing the decoded images.

In short, the image display device according to the second embodiment of the present invention can produce the effect inherent in the image display device of the first embodiment and also can mitigate the delay caused by the filtering process and reduce the number of hardware components, thereby realizing more suitable flicker noise reduction.

Third Embodiment

FIG. 10 illustrates the structure of an exemplary image recording and reproduction device using the image signal process in the first or second embodiment. In this description, an image signal processor (1003) has the same structure as that of the image decoder (102) and image processor (109) of the first embodiment, and therefore the detailed operations of the image signal processor (1003) have been already described in the first embodiment or second embodiment and the description is not reiterated.

The image recording and reproduction device (1000) includes an input unit (1001) inputting an encoded image signal that is encoded by a predetermined coding scheme, a recording/reproducing switching unit (1002) switching between recording/reproduction of contents input from the input unit (1001) and reproduction of images accumulated in a content storage unit, which will be described later, the content storage unit (1004) storing contents when the recording/ reproducing switching unit (1002) performs recording operations, an image signal processor (1003) performing image signal processing described in the first or second embodiment to a content input from the input unit (1001) or an encoded image signal from the content storage unit (1004), the content and encoded image signal being retrieved by the recording/ reproducing switching unit (1002), an image output unit (1005) outputting image signals processed in the image signal processor (1003), an audio output unit (1006) outputting audio signals output from the recording/reproducing switching unit (1002), a controller (1007) controlling respective components in the image recording and reproduction device (1000), a user interface (1008) used by a user to operate the image recording and reproduction device (1000), and some other components.

The image recording and reproduction device according to the third embodiment of the present invention causes the image signal processor (1003) to perform the filtering process, described in the first embodiment or second embodiment, to the decoded image signal.

The third embodiment can provide an image recording and reproduction device capable of more suitably reducing flicker noise of decoded images including intraframe-prediction decoded images and interframe-prediction decoded images, which are input into the input unit or stored in the content storage unit and reproduced, and outputting the decoded images.

Reference Signs List

| | |
|---|---|
| 100: | image display device |
| 101: | input unit |
| 102: | image decoder |
| 103: | first buffer |
| 104: | second buffer |
| 105: | third buffer |
| 106: | filter unit |
| 107: | switching unit |
| 108: | output unit |
| 150: | encoded image data |
| 151: | decoded image |
| 152: | decoded image output from first buffer (103) |
| 153: | decoded image output from second buffer (104) |
| 154: | decoded image output from third buffer (105) |
| 155: | post-filtered decoded image |
| 156: | decoded image output from switching unit (107) |
| 200: | image coding device |
| 201: | image divider |
| 202: | subtracter |
| 203: | DCT unit |
| 204: | quantizer |
| 205: | variable length encoder |
| 206: | inverse quantizer |
| 207: | inverse DCT unit |
| 208: | adder |
| 209: | frame memory |
| 210: | motion estimation unit |
| 250: | input image |
| 251: | input image block |
| 252: | differential image signal |
| 253: | quantized data |
| 254: | encoded image data |
| 255: | reference image |
| 256: | predicted image block |
| 257: | motion information |
| 301: | variable length decoder |
| 302: | inverse quantizer |
| 303: | inverse DCT unit |
| 304: | adder |
| 305: | frame memory |
| 306: | motion compensation unit |
| 350: | encoded image data |
| 351: | differential block data |
| 352: | reference image |
| 353: | decoded image |
| 354: | motion information |
| 1000: | image recording and reproduction device |
| 1001: | input unit |

1002:   recording/reproducing switching unit
1003:   image signal processor
1004:   content storage unit
1005:   image output unit
1006:   audio output unit
1007:   controller
1008:   user interface.


**Claims**

1.  An image display device comprising:

    an input unit inputting encoded image data including images encoded by intraframe prediction and images encoded by interframe prediction;
    an image decoding unit decoding the encoded image data;
    a filter unit filtering decoded images output from the image decoding unit; and
    a display unit displaying the filtered images, wherein
    the filter unit performs a process to correct the value of a pixel in, among the decoded images output from the image decoding unit, at least a decoded image decoded by interframe prediction and immediately preceding in time a decoded image decoded by intraframe prediction.

2.  The image display device according to claim 1, wherein,
    among the decoded images output from the image decoding unit, the filter unit reduces the difference between the value of a pixel on an object in a first decoded image decoded by intraframe prediction and the value of a pixel on an object in a second decoded image decoded by interframe prediction and immediately preceding in time the first decoded image, and the pixel on the object in the second decoded image corresponds to the pixel on the object in the first decoded image.

3.  The image display device according to claim 1, wherein,
    among the decoded images output from the image decoding unit, the filter unit performs a filtering process to smooth signal values, in a temporal direction, between a decoded image decoded by intraframe prediction and a plurality of decoded images that are decoded by interframe prediction and precede or follow in time the decoded image decoded by intraframe prediction.

4.  The image display device according to claim 1, wherein,
    among the decoded images output from the image decoding unit, the filter unit performs a process to approximate the value of a pixel in the second decoded image to the value of the corresponding pixel in the first decoded image, and the second decoded image is a forward prediction decoded image closest to and preceding in time the first decoded image decoded by intraframe prediction.

5.  The image display device according to claim 1, wherein,
    the filter unit, by using signal values of two intraframe-prediction decoded images decoded by intraframe prediction among the decoded images output from the image decoding unit, performs a process to correct the signal value of an interframe-prediction decoded image decoded by interframe prediction and located between or after in time the two intraframe-prediction decoded images.

6.  The image display device according to claim 5 further comprising:

    a first buffer and a second buffer storing intraframe-prediction decoded images; and
    a third buffer storing interframe-prediction decoded images, wherein
    the filter unit performs a process to correct the signal value of an interframe-prediction decoded image stored in the third buffer by using signal values of two intraframe-prediction decoded images stored in the first buffer and the second buffer.

7.  An image recording and reproduction device comprising:

    an input unit into which encoded image data including images encoded by intraframe prediction and images encoded by interframe prediction is input;

a storage unit storing the encoded image data;

an image decoding unit decoding the encoded image data input into the input unit or the encoded image data output from the storage unit;

a filter unit filtering decoded images output from the image decoding unit; and

an output unit outputting the filtered images, wherein

the filter unit performs a process to correct the value of a pixel in, among the decoded images output from the image decoding unit, at least a decoded image decoded by interframe prediction and immediately preceding in time a decoded image decoded by intraframe prediction.

8. The image recording and reproduction device according to claim 7, wherein,

among the decoded images output from the image decoding unit, the filter unit reduces the difference between the value of a pixel on an object in a first decoded image decoded by intraframe prediction and the value of a pixel on an object in a second decoded image decoded by interframe prediction and immediately preceding in time the first decoded image, and the pixel on the object in the second decoded image corresponds to the pixel on the object in the first decoded image.

9. The image recording and reproduction device according to claim 7, wherein,

among the decoded images output from the image decoding unit, the filter unit performs a filtering process to smooth signal values, in a temporal direction, between a decoded image decoded by intraframe prediction and a plurality of decoded images that are decoded by interframe prediction and precede or follow in time the decoded image decoded by intraframe prediction.

10. The image recording and reproduction device according to claim 7, wherein,

among the decoded images output from the image decoding unit, the filter unit performs a process to approximate the value of a pixel in the second decoded image to the value of the corresponding pixel in the first decoded image, and the second decoded image is a forward prediction decoded image closest to and preceding in time the first decoded image decoded by intraframe prediction.

11. The image recording and reproduction device according to claim 7, wherein,

the filter unit, by using signal values of two intraframe-prediction decoded images decoded by intraframe prediction among the decoded images output from the image decoding unit, performs a process to correct a signal value of an interframe-prediction decoded image decoded by interframe prediction and located between or after in time the two intraframe-prediction decoded images.

12. The image recording and reproduction device according to claim 11 further comprising:

a first buffer and a second buffer storing intraframe-prediction decoded images; and

a third buffer storing interframe-prediction decoded images, wherein

the filter unit performs a process to correct a signal value of an interframe-prediction decoded image stored in the third buffer by using signal values of two intraframe-prediction decoded images stored in the first buffer and the second buffer.

13. An image processing method comprising the steps of:

decoding images encoded by intraframe prediction and images encoded by interframe prediction; and

filtering decoded images decoded in the decoding step, wherein

in the filtering step, a process is performed to correct the value of a pixel in, among the decoded images decoded in the decoding step, at least a decoded image decoded by interframe prediction and immediately preceding in time a decoded image decoded by intraframe prediction.

14. The image processing method according to claim 13, wherein,

in the filtering step, among the decoded images decoded in the decoding step, the difference between the value of a pixel on an object in a first decoded image decoded by intraframe prediction and the value of a pixel on an object in a second decoded image decoded by interframe prediction and immediately preceding in time the first decoded image is reduced, and the pixel on the object in the second decoded image corresponds to the pixel on the object in the first decoded image.

**15.** The image processing method according to claim 13, wherein,
in the filtering step, among the decoded images decoded in the decoding step, a filtering process is performed to smooth signal values, in a temporal direction, between a decoded image decoded by intraframe prediction and a plurality of decoded images that are decoded by interframe prediction and precede or follow in time the decoded image decoded by intraframe prediction.

**16.** The image processing method according to claim 13, wherein,
in the filtering step, among the decoded images decoded in the decoding step, a process is performed to approximate the value of a pixel in the second decoded image to the value of the corresponding pixel in the first decoded image, and the second decoded image is a forward prediction decoded image closest to and preceding in time the first decoded image decoded by intraframe prediction.

**17.** The image processing method according to claim 13, wherein,
in the filtering step, by using signal values of two intraframe-prediction decoded images decoded by intraframe prediction among the decoded images decoded in the decoding step, a process is performed to correct a signal value of an interframe-prediction decoded image decoded by interframe prediction and located between or after in time the two intraframe-prediction decoded images.

EP 2 320 663 A1

# FIG. 1

# FIG. 2

EP 2 320 663 A1

## FIG. 3

EP 2 320 663 A1

# FIG. 4

(a)

EXAMPLE OF GOP
STRUCTURE AND CODING
DISTORTION PROPAGATION

(b)

CHANGES IN PIXEL VALUE OF
INPUT IMAGE ACCORDING TO
TEMPORAL DIRECTION

(c)

CHANGES IN PIXEL VALUE OF
DECODED IMAGE ACCORDING
TO TEMPORAL DIRECTION

EP 2 320 663 A1

# FIG. 5

```
        ( START )
           │
           ▼
┌──────────────────────────┐
│  EXTRACT BLOCK blk_curr   │  S501
│  TO BE CORRECTED FROM     │
│  THIRD BUFFER (105)       │
└──────────────────────────┘
           │
           ▼
┌──────────────────────────┐
│  EXTRACT BLOCK blk_back   │  S502
│  CORRESPONDING TO blk_curr│
│  FROM FIRST BUFFER (103)  │
└──────────────────────────┘
           │
           ▼
┌──────────────────────────┐
│  EXTRAC BLOCK blk_fwd     │  S503
│  CORRESPONDING TO blk_curr│
│  FROM SECOND BUFFER (104) │
└──────────────────────────┘
           │
           ▼
┌──────────────────────────┐
│  FILTER blk_curr WITH     │  S504
│  blk_back AND blk_fwd     │
└──────────────────────────┘
           │
           ▼
      S505
    ◇ LAST PIXEL IN ◇ ──NO──►  ┌──────────────┐  S506
    ◇ blk_curr (i)? ◇          │ TO NEXT PIXEL│
           │                   └──────────────┘
          YES
           │
           ▼
      S507
    ◇ LAST BLOCK? ◇ ──NO──►  ┌──────────────┐  S508
           │                 │ TO NEXT BLOCK│
          YES                └──────────────┘
           │
           ▼
        ( END )
```

# FIG. 6

(a)

(b)

# FIG. 7

# FIG. 8

(a)

DECODED IMAGE (610) IN FIG. 6

(b)

BLOCK (601) IN FIG. 6

## FIG. 9

## FIG. 10

# FIG. 11

| | TIME | INPUT IMAGE PIXEL VALUE | DECODED IMAGE PIXEL VALUE |
|---|---|---|---|
| I0 | 0 | 16 | 13 |
| P1 | 1 | 18 | 17 |
| P2 | 2 | 20 | 17 |
| P3 | 3 | 21 | 15 |
| P4 | 4 | 23 | 17 |
| P5 | 5 | 25 | 15 |
| P6 | 6 | 27 | 15 |
| P7 | 7 | 28 | 17 |
| P8 | 8 | 30 | 16 |
| I9 | 9 | 32 | 30 |
| P10 | 10 | 34 | 31 |
| P11 | 11 | 36 | 33 |
| P12 | 12 | 37 | 33 |
| P13 | 13 | 39 | 32 |
| P14 | 14 | 41 | 32 |
| P15 | 15 | 43 | 35 |
| P16 | 16 | 44 | 36 |
| P17 | 17 | 46 | 35 |
| I18 | 18 | 48 | 45 |

# FIG. 12

# FIG. 13

| | TIME | w0 | w1 | w2 | CORRECTED IMAGE PIXEL VALUE |
|---|---|---|---|---|---|
| I0 | 0 | 0.0000 | 1.0000 | 0.0000 | 13 |
| P1 | 1 | 0.4791 | 0.5065 | 0.0145 | 15 |
| P2 | 2 | 0.4290 | 0.5358 | 0.0352 | 16 |
| P3 | 3 | 0.3482 | 0.5741 | 0.0777 | 15 |
| P4 | 4 | 0.2476 | 0.6022 | 0.1502 | 18 |
| P5 | 5 | 0.1502 | 0.6022 | 0.2476 | 18 |
| P6 | 6 | 0.0777 | 0.5741 | 0.3482 | 20 |
| P7 | 7 | 0.0352 | 0.5358 | 0.4290 | 22 |
| P8 | 8 | 0.0145 | 0.5065 | 0.4791 | 23 |
| I9 | 9 | 0.0000 | 1.0000 | 0.0000 | 30 |
| P10 | 10 | 0.4791 | 0.5065 | 0.0145 | 31 |
| P11 | 11 | 0.4290 | 0.5358 | 0.0352 | 32 |
| P12 | 12 | 0.3482 | 0.5741 | 0.0777 | 33 |
| P13 | 13 | 0.2476 | 0.6022 | 0.1502 | 33 |
| P14 | 14 | 0.1502 | 0.6022 | 0.2476 | 35 |
| P15 | 15 | 0.0777 | 0.5741 | 0.3482 | 38 |
| P16 | 16 | 0.0352 | 0.5358 | 0.4290 | 40 |
| P17 | 17 | 0.0145 | 0.5065 | 0.4791 | 40 |
| I18 | 18 | 0.0000 | 1.0000 | 0.0000 | 45 |

# FIG. 14

# FIG. 15

| | TIME | INPUT IMAGE PIXEL VALUE | DECODED IMAGE PIXEL VALUE |
|---|---|---|---|
| I0 | 0 | 16 | 13 |
| P1 | 1 | 18 | − |
| P2 | 2 | 20 | − |
| P3 | 3 | 21 | − |
| P4 | 4 | 23 | − |
| P5 | 5 | 25 | − |
| P6 | 6 | 27 | − |
| P7 | 7 | 28 | − |
| P8 | 8 | 30 | 16 |
| I9 | 9 | 32 | 30 |
| P10 | 10 | 34 | 31 |
| P11 | 11 | 36 | 33 |
| P12 | 12 | 37 | 33 |
| P13 | 13 | 39 | 32 |
| P14 | 14 | 41 | 32 |
| P15 | 15 | 43 | 35 |
| P16 | 16 | 44 | 36 |
| P17 | 17 | 46 | 35 |
| I18 | 18 | 48 | − |

# FIG. 16

| | TIME | w0 | w1 | w2 | CORRECTED IMAGE PIXEL VALUE |
|---|---|---|---|---|---|
| I9 | 9 | 0 | 1 | 0 | 30 |
| P10 | 10 | 0.479082 | 0.506451 | 0.014467 | 31 |
| P11 | 11 | 0.429013 | 0.535772 | 0.035215 | 32 |
| P12 | 12 | 0.348207 | 0.574097 | 0.077696 | 33 |
| P13 | 13 | 0.247589 | 0.602241 | 0.15017 | 34 |
| P14 | 14 | 0.15017 | 0.602241 | 0.247589 | 35 |
| P15 | 15 | 0.077696 | 0.574097 | 0.348207 | 39 |
| P16 | 16 | 0.035215 | 0.535772 | 0.429013 | 41 |
| P17 | 17 | 0.014467 | 0.506451 | 0.479082 | 41 |
| I8 | 18 | 0 | 1 | 0 | 47 (*1) |

# FIG. 17

# FIG. 18

(a)

(b)

**INTERNATIONAL SEARCH REPORT**

International application No.

PCT/JP2009/002066

A.  CLASSIFICATION OF SUBJECT MATTER
*H04N7/32(2006.01)i*

According to International Patent Classification (IPC) or to both national classification and IPC

B.  FIELDS SEARCHED

Minimum documentation searched (classification system followed by classification symbols)
H04N7/24-7/68, H04N5/21

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X | JP 11-113001 A (Matsushita Electric Industrial Co., Ltd.), 23 April, 1999 (23.04.99), Claim 1; Par. Nos. [0016] to [0025] (Family: none) | 1-17 |
| A | JP 2008-177648 A (Nippon Hoso Kyokai), 31 July, 2008 (31.07.08), Full text; all drawings (Family: none) | 1-17 |
| A | JP 9-224250 A (Nippon Hoso Kyokai), 26 August, 1997 (26.08.97), Full text; all drawings (Family: none) | 1-17 |

☒  Further documents are listed in the continuation of Box C.          ☐  See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 10 August, 2009 (10.08.09) | 18 August, 2009 (18.08.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

| International application No. |
| --- |
| PCT/JP2009/002066 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2008-16904 A  (Sony Corp.),<br>24 January, 2008 (24.01.08),<br>Full text; all drawings<br>& US 2008/0002063 A1     & EP 1876811 A2 | 1-17 |

Form PCT/ISA/210 (continuation of second sheet) (April 2007)

**EP 2 320 663 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006229411 A